# EUROPEAN PATENT SPECIFICATION

(11) **EP 0 333 434 B1**
(45) Date of publication and mention of the grant of the patent: **18.08.1993**
(21) Application number: 89302503.1
(22) Date of filing: 14.03.1989
(51) Int. Cl.: B60C 9/20, B60C 9/28

(54) **Radial tyre for motorcycle**
Radialer Luftreifen für Motorräder
Pneumatique radial pour motos

(30) Priority: 15.03.1988 JP 61126/88; 24.01.1989 JP 16559/89
(43) Date of publication of application: 20.09.1989
(73) Proprietor: SUMITOMO RUBBER INDUSTRIES LIMITED, Chuo-ku Kobe-shi Hyogo 651 (JP)
(72) Inventor: Noma, Hiroyuki, Kobe-shi Hyogo-ken (JP); Kouno, Tadao, Sakaishi Osaka-fu (JP); Kadomaru, Kazuo, Ibaragi-shi Osaka-fu (JP)
(74) Representative: Stewart, Charles Geoffrey

(56) References cited:
- EP-A- 0 294 153
- FR-A- 1 353 550
- FR-A- 2 248 161
- GB-A- 2 128 556
- US-A- 3 675 703

## Description

The present invention relates to a radial tyre for a motor-cycle which is improved in high speed performance.

In general motor-cycle tyres are of cross ply structure, in which the carcass plies cords of each ply are crossed with each other at 25 to 60 degrees with respect to the circumferential direction of the tyre.

The reason is that the requirements for motor- cycles are radically different from those for four wheel vehicles such as passenger cars, particularly, in respect of operation during cornering.

A motor-cycle is tilted during cornering at an extremely large camber angle up to 40 or even 55 degrees with respect to a plane perpendicular to the road surface, while the camber angle in a four wheel vehicle is generally a maximum of only 3 to 4 degrees.

The centrifugal force in cornering is balanced with a force (camber thrust) generated in parallel to the road surface at the tyre ground contacting zone in the direction of the camber angle when the motor cycle is tilted.

Accordingly, it is necessary for motor-cycle tyres to have characteristics to generate a stable camber thrust to run stably and safely. That is, motor-cycle tyres must be laterally stiffened.

In the past, therefore, cross ply carcasses have been used as described above so as to provide for camber thrust, and radial ply carcasses having less lateral stiffness have hardly be used.

The cross ply tyres have however, drawbacks such as weave phenomenon (transverse vibration of the motor-cycle frame resulting from the lateral stiffness of the tyre) which occurs during high speed straight running, and wear resistance is low.

As counter measures to such problems there have been adjustments to the carcass cord arrangement angle and increasing the number of carcass plies but the drawbacks attributable to the cross ply structure still cannot completely be removed as far as the cross ply structure is employed.

Therefore, recently, to solve the above mentioned drawbacks of the cross ply structure, there have been developed radial ply tyres in which the sidewall portions are increased in rigidity to provide lateral stiffness.

However, it has been found that separation of the breaker edge portions from the surrounding rubber frequently occurs when a radial ply structure is applied to a motor-cycle tyre differently to passenger car tyres, for the following reasons:-

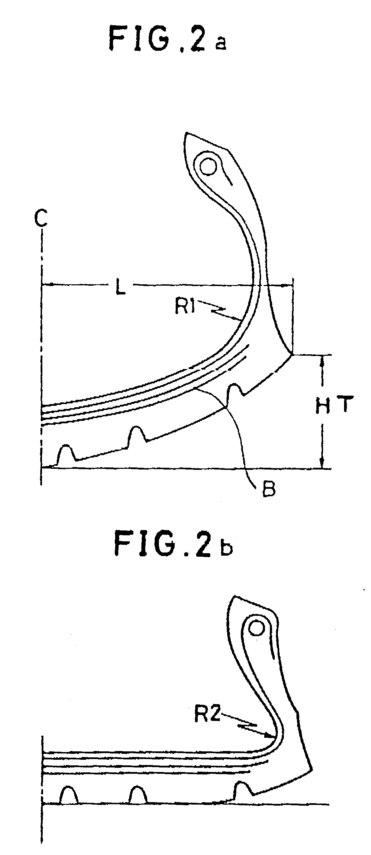

In motor-cycle tyres, as shown typically in Fig 2 (a), the radius of curvature of the tread is small, that is the camber HT/L is large, and the breaker comprises at least one ply of cords which ply extends across the whole width of the tread. As a result, the tension in the breaker cords in the tread centre regions is different from those in the tread edge regions, and thus stress concentrates in the breaker edges.

Further, because of the high rigidity of the sidewall portions and the small radius of curvature of the tread crown region, deformation of the tyre during running becomes great particularly from the shoulder portion to the buttress portion as shown in Figs. 2 a, and 2b, and the radius of curvature of the inner surface of the tyre shoulder is greatly is decreased to R2 (Fig 2b) from R1 (Fig.2a) when the tread is deformed into the ground contacting state of Fig 2(b) from the free state of Fig 2(a). Thus because the breaker edges B are laid in such greatly deformed regions, a great shear stress is generated around the breaker edges.

If super high elastic modulus and high tensile strength cords such as steel cords, general aromatic polyamide cords and the like are used as the breaker cords of a radial tyre, for the purpose of improving durability against such deformation and stress concentration together with steering stability and the resistance to wear, then the difference in elastic modulus between the breaker cords and the carcass cords becomes more than 3000 kgf/mm², which is too large, therefore, the shearing stress induced by the above mentioned deformation is so large that ply separation is accelerated. Accordingly, to try to prevent this ply separation by reducing the great step difference in elastic modulus between the carcass cords and the breaker cords, low elastic modulus breaker cords made of the same material as the carcass cords or a similar material, for example, nylon cords and the like have sometimes been used.

However, in tyres provided with a nylon breaker, the rigidity of the ground contacting region of the tread becomes low, and the resistance to wear and the steering stability are both impaired.

Furthermore, owing to the heat generation of the tyre during running, the elastic modulus of such low modulus cords becomes still lower. As a result, growth of tyre is induced, and the durability and the steering stability are deteriorated.

On the contrary, if high elastic modulus cords the same or similar to the breaker cords, for example, steel cords, general aromatic polyamide cords or the like, are used as the carcass cords, then the rigidity of the tyre as a whole become too large so that ride comfort and steering stability become impaired.

It is, therefore, an object of the present invention to provide a radial tyre for motor-cycles in which the above mentioned problems are completely solved to prevent ply separation at the breaker edge portions, and to improve the durability of the tyre without deteriorating the resistance to wear, the steering stability or the ride comfort.

According to the present invention a radial tyre for a motor-cycle comprises a pair of bead cores one disposed in each bead portion of the tyre, a carcass ply extending between the bead portions and turned up at the edge portions thereof around the bead cores and a breaker disposed radially outside said carcass ply and comprising a first ply lying adjacent to the carcass ply and a second ply lying radially outside the first ply characterised in that the said carcass ply is composed of cords having an elastic modulus MC of 250 to 600 kgf/mm² arranged radially at an angle of 70 to 90 degrees to the tyre equator, the first ply of the breaker comprises cords having an elastic modulus MB1 of 450 to 1100 kgf/mm² and arranged at an angle of 10 to 30 degrees to the tyre equator, the second ply of the breaker comprises cords having an elastic modulus MB2 of 650 to 1600 kgf/mm² and arranged at an angle of 10 to 30 degrees to the tyre equator, the elastic modulus MB2 of the second ply cords being larger than the elastic modulus MB1 of the first ply cords and the elastic modulus MB1 of the first ply cords being larger than the elastic modulus MC of the carcass ply cords.

Preferably, the difference MB2-MB1 and the difference MB1-MC are set in a range of 200 to 500 kgf/mm².

In the present invention, the elastic modulus of a cord is the initial elastic modulus, and in practice, the modulus is found in the following manner.

Load the cord with a small load less than 5 kgf/cord, plot a load/elongation curve (which is generally linear in such a small load range), extend, at the same slope, the plotted curve to the point of 10% elongation, read the load F corresponding to 10% elongation of the cord, obtain the sectional area S of the cord, and calculate from the following equation:

$\text{Elastic Modulus of Cord =(F/S)X 10}$

An embodiment of the present invention will now be described in detail, by way of example only, with reference to the accompanying drawings, in which:-
Fig.1 is a cross sectional view of a tyre
Figs 2(a) and 2 (b) are schematic sectional views showing the unloaded state and the loaded ground contacting state respectively.
Fig.3 is a graph showing the relationship between the durability and the elastic modulus of aromatic polyamide.

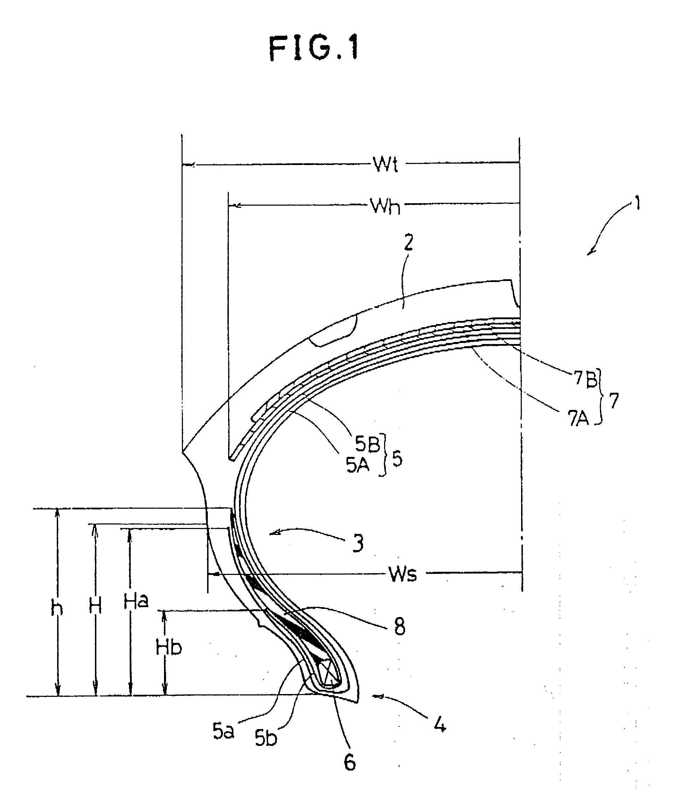

In Fig 1, the tyre 1 has a tread portion 2, a pair of sidewall portions 3 extending inwardly one from each tread edge and a pair of bead portions 4 each positioned at the radially inward end of each sidewall portion 3. The tyre has a radial cord carcass 5 extending between the bead portions 4 through the sidewall portions 3 and the tread portion 2, and a pair of bead cores 6 one disposed in each bead portion 5.

The carcass 5 in this embodiment is composed of two plies 5A and 5B of cords.

The edges of at least one of the carcass plies, 5A, 5B and in this example the edges of both of the two carcass plies 5A& 5B are folded around the bead cores 6 from the inside to the outside thereof, and they are terminated above the bead cores 6 in the upper bead portions or in the sidewall portions 3.

Preferably, the end of the axially outer folded portion 5a of the carcass ply 5A extends radially outwardly beyond the end of the axially inner folded portion 5b of the carcass ply 5B so that the outer folded portion 5a covers the end of the inner folded portion 5b, to mitigate stress concentrations on the end of the inner folded portion 5b.

Further, the sidewall portions of the tyre are reinforced by arranging the heights Hb and Ha of the inner folded portion 5b and the outer folded portion 5a from the bead base to be within the range of 55 to 65% and the range of 70 to 150% of the height H of the point of the maximum tyre section width Ws in the sidewall region of the tyre respectively.

In this example, the height Ha of the outer folded portion 5a of the carcass ply is nearly the same as the height H of the point of the maximum tyre section width Ws.

The tread 2 is disposed over the crown of the carcass 5, and the sectional shape thereof is set so that the contour becomes substantially parallel to the outer face of the carcass 5 or the thickness thereof decreases gradually from the tread centre towards the tread edges.

The axial width Wt of the tread is larger than the maximum tyre section width Ws measured at the sidewalls which allows the camber thrust generated when the tyre is tilted to be taken by the tyre even when steeply banked over.

The cords in each carcass ply 5A, 5B are arranged at an angle of 70 to 90 degrees with respect to the tyre equator. If the angle of this cord arrangement is smaller than 70 degrees, then the improvement in tyre performance in high speed running is not achieved.

For the carcass cords, organic fibre cords with a elastic modulus in the range of 250 to 600 kgf/mm², such as nylon 6, nylon 6-6, rayon, polyester or high modulus polyester cords, are used. In the case that 840 to 1890 denier fibre cords are used, such cords are preferably embedded in a rubber having a 100% modulus of 10 to 50 kgf/mm² at a density ranging from 35 to 60 cords/5cm.

According to the present invention, the carcass 5 can be composed of one or more plies, and as an alternative to the construction in which the carcass ply 5 is turned up around the bead cores 6 from the inside to the outside thereof as shown in Fig.1, a construction in which the carcass ply is turned up from the outside to the inside of the bead cores may be applied to the carcass. Further, a combination construction of the former two may be applied thereto in case of a carcass of plural plies.

A breaker 7 is disposed radially outside the crown of the carcass 5 and inside the tread.

The breaker 7 in this example is composed of two plies 7A and 7B of parallel cords. The first ply 7A being disposed radially outside the carcass and the second ply 7B disposed on the first ply 7A.

The cords in the breaker 7 are arranged at 10 to 30 degrees to the tyre equator. If the cord arrangement angle is smaller, the tread stiffness is excessively increased so that impacts caused by pebbles on the road or roughness of the road becomes felt strongly by the motor-cycle rider, and running stability as well as the ride comfort is hampered. On the other hand, the running stability at high speed running is hindered, if the angle is larger.

The breaker plies are varied in width from each other to shift the positions of the edges of each ply from those of another ply, whereby the stress concentration on the breaker edges is eased.

The inner first ply 7A is composed of organic fibre cords with an elastic modulus in the range of 450 to 1100 kgf/mm².

The outer second ply 7b is composed of aromatic polyamide cords with a cord elastic modulus being in a range of 650 to 1600 kgf/mm².

Further, the outer second ply 7B is larger in elastic modulus than the inner first ply 7a, and the difference therebetween is in a range of 200 to 500 kgf/mm².

The elastic modulus in each ply has to be increased radially outwardly from the inner ply to the outer second ply by an amount between 200 and 500 kgf/mm². Accordingly, the tread is improved in rigidity, while the step difference between radially adjacent breaker plies is held in a narrow range.

As a result, the stress concentration on the breaker ply edge caused by repeated deformation during running is lessened, and thereby ply separation at the breaker edges is effectively prevented.

In general, aromatic polyamide fibre cords have been well known as cords having a high elastic modulus of more than 3700 kgf/mm² and high tensile strength, and to put such characteristics to practical use, various efforts to develop new uses thereof and how to use such a high modulus material have been made.

In the present invention, however, the aromatic polyamide fibre cord used for the breaker has a comparatively low modulus ranging from 650 to 1600 kgf/mm².

The reason why such low modulus aromatic polyamide cords are used is that an aromatic polyamide fibre cord has less dependence upon temperature in both the rigidity and the dimensions, that is, it has characteristics which are changed less by temperature change. This is an important aspect of the present invention.

Thereby, the strain induced in the cords at the breaker edges by the radius of curvature of the tread crown being small becomes less, and tyre growth accompanied by high heat generation during high speed running is prevented. Thus tyre rigidity is made more uniform and resistance to wear and high speed durability are further enhanced.

Furthermore, for the cords of the inner first ply 7A, polyester or high modulus polyester fibre cords can be used, but more preferably aromatic polyamide fibre cords are used to still further reduce tyre growth.

As aromatic polyamide fibre cords having such low modulus of elasticity, it is preferable to use high extensibility cords for the inner first ply 7A and high extensibility cords or medium extensibility cords for the outer second ply 7B.

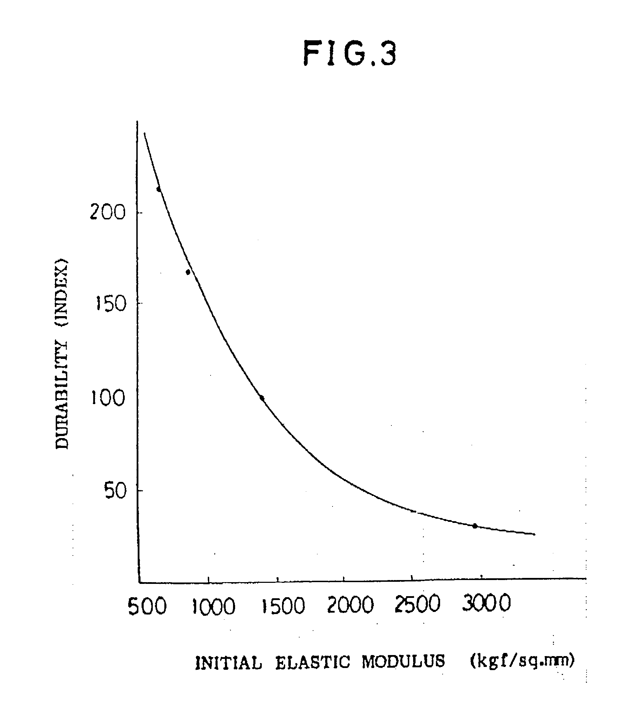

Fig.3 shows the relationship between the elastic modulus and tyre durability evaluated on a drum tester, wherein, tyre durability is expressed by the resistance to ply separation caused by tyre rotations using an index.

It is apparent from Fig.3, that the durability increases in accordance with the decrease in the modulus. In practice, however, the lower limit of the elastic modulus for the breaker cords is set to balance the longitudinal rigidity to the lateral rigidity which is required for tyre characteristics such as hoop effect, camber thrust and steering stability, and the lower limit was set as 650 kgf/mm².

The reason why the difference in elastic modulus is set to be in the range of 200 to 500 kgf/mm² is as follows:-
If it is less than 200 kgf/mm² then the rigidity of the tread portion as a whole becomes too low, and the resistance to wear is greatly deteriorated (Ref: 4). On the contrary, if it is more than 500 kgf/mm² a ply separation between the carcass ply and the breaker ply is apt to be induced, and accordingly improvement in tyre durability is not achieved (Ref 1,2 3 and 5).

As one of modifications of the breaker 7, there can be used such a three ply breaker having a third ply radially outside the above mentioned second ply 7B.

In this case, for the cords of the third ply, aromatic polyamide fibre cords having elastic modulus ranging from 850 to 2100 kgf/mm² and being larger than that of the second ply by between 200 and 500 kgf/mm² are used.

Thereby, it becomes possible to further increase the resistance to wear of the tyre.

As described above, according to the present invention, the cords which are used in the tyre for the carcass and the breaker have a large elastic modulus the more outwardly they are in the tyre. That is, the tyre cords, including the carcass cords and the breaker cords, have increased elastic modulus radially outwardly being increased gradually with the narrow limited small step differences specified. Accordingly, the rigidities of the cord plies are also increased radially outwardly but also gradually without a great step difference between them or rather a preset small step difference.

Furthermore, while maintaining the resistance to wear, the steering stability and the ride comfort, the high speed durability can be greatly improved by the lessened cord strain at the breaker ply edges owing to the low elastic modulus of the breaker cords, and by the stability of the aromatic polyamide fibre cords against temperature change.

Further, the tyre is provided in each bead portion 4 with a bead apex 8. The bead apex is disposed between the main portion and the folded portions (5a, 5b) of the carcass so as to reinforce the tyre from the bead portion 4 to the sidewall portion 3.

The bead apex 8 is made of hard rubber and the hardness of the bead apex is in a range of 65 to 95 Shore A. The bead apex 8 is extended taperingly from the bead core 6 into the sidewall portion 3, and the height h of the upper end of the bead apex 8 from the bead base is preferably in the range of 20 to 50% of the tyre section height.

In the tyre sectional shape, the camber value is preferably set to be more than 0.2, and more preferably more than 0.3, wherein the camber value is, as shown in Fig.2 (a), defined as the ratio (HT/L) of the radial distance HT between the tread edge and the tread centre to the axial distance L between the tread edge and the tyre equator.

Test tyres of size 140/80-17 for a motor cycle rear wheel were made by way of trial according to the structure shown in Fig.1 and the details thereof are given in Table 1. The test tyres were tested to evaluate their durability, resistance to wear, and resistance to weave phenomenon. The test results are also shown in Table 1, wherein the results are expressed by an index based on the assumption that the result of the tyre of Ref.1 according to the prior art is 100. The higher the value the better the performance.

The durability test was performed by using a 60 inch diameter drum tester, and the time to tyre failure was measured under the following conditions, the tyre load was 150% of the maximum load regulated in JATMA standard, the inner air pressure was 2.25 kgf/cm², and the running speed was 65 km/h.

The value of camber thrust is the average of the test data measured at camber angles of 20, 30 and 40 degrees under the following conditions, the internal air pressure was 2.8 kgf/cm² and the tyre load was 320 kgf.

The wear resistance test was carried out on a circuit course, and the wear was measured after the motor-cycle provided on the rear wheel with the test tyre, had run 1500 km at an average speed of 180km/h under the following conditions, the internal air pressure was 2.0 kgf/cm² in the front tyre and 2.25 kgf/cm² in the rear tyre.

The test for the resistance to weave phenomenon was carried out by a skilled test rider on a circuit course to know by the rider's feel the speed at which the vehicle vibration is naturally generated during running.

As apparent from Table 1, the working examples of the present invention Ex.1-5 were considerably improved in endurance durability, while maintaining the other good characteristics from the radial structure such as wear resistance, camber thrust (cornering performance) and ride comfort.

In particular, Ex.3 to 5 in which aromatic polyamide cords whose elastic modulus was in the range of 450 to 1100 kgf/mm² were used for the first breaker ply, displayed a highly balanced performance.

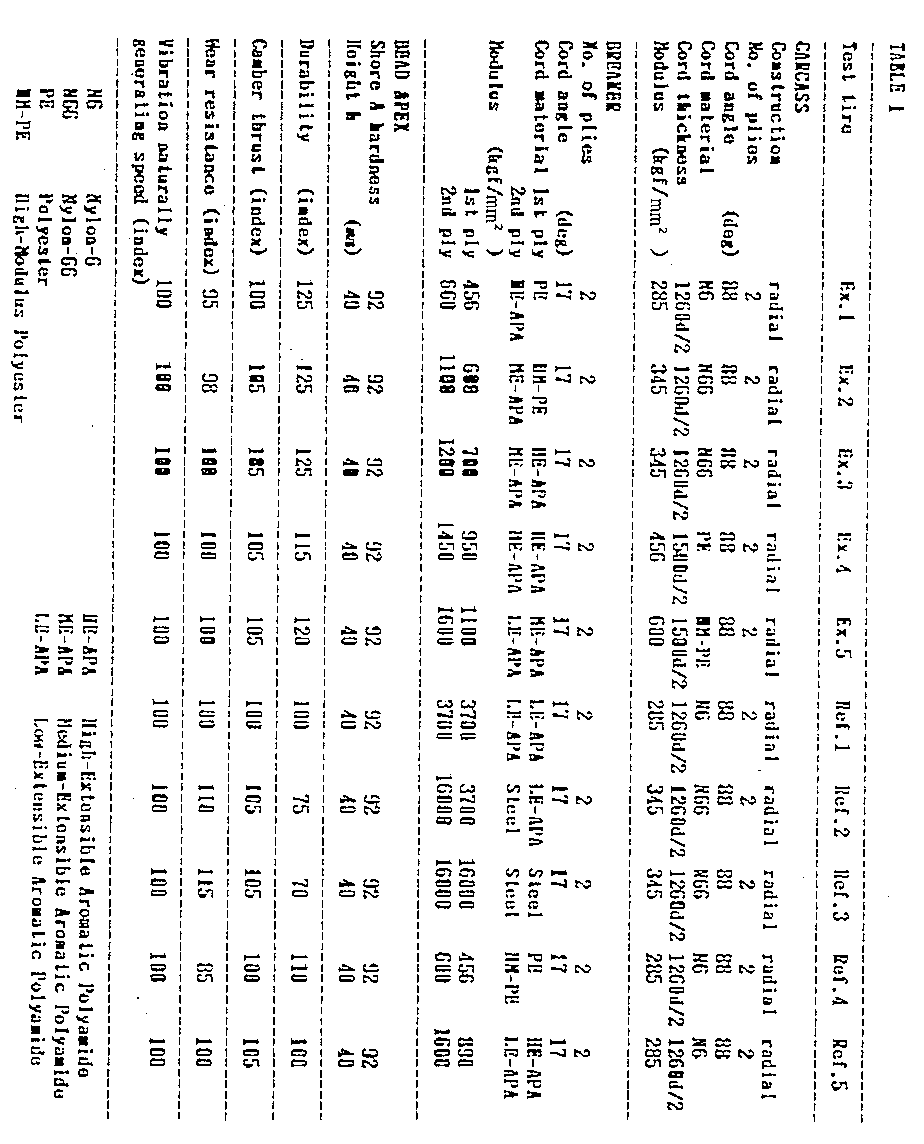

As described above, according to the present invention, the tyre is provided with a radial construction, and the cords having an elastic modulus between 250 and 600 kgf/mm² is used as the carcass cords, whereby the rigidity of the tyre is suitably eased so as to maintain the steering stability and the ride comfort.

Further, the inner first ply and outer second ply of the breaker are 450 to 1100 kgf/mm² and 650 to 1600 kgf/mm² respectively, in elastic modulus. And the plies of the carcass and breaker are increased in the elastic modulus gradually and radially outwardly, that is, in radially outwardly located order. This can suitable increase the tread stiffness, while keeping the rigidity gap between adjacent plies in a specific narrow range, which have never been attained in the prior art. Therefore, the wear resistance is maintained, and the ply separation in the breaker edges is lessened, whereas ply separation is often caused in case of a breaker of super high modulus cords such as steel cords or the general aromatic polyamide cords.

Furthermore, aromatic polyamide cord which has a comparatively low elastic modulus but a high resistance to heat is used for the second ply of the breaker, whereby the variations of the breaker in elastic modulus and dimensions caused by temperature increase during high speed running can be effectively controlled. And further, by the lessened cord strain at the breaker ply edges owing to the low elastic modulus of the breaker cords, and by the stability of the aromatic polyamide fibre cords against temperature change, the steering stability and the ride comfort, the structural endurance durability is greatly improved, while the wear resistance is maintained.

## Claims

1. A radial tyre for a motor-cycle comprising a pair of bead cores (6) one disposed in each bead portion (4) of the tyre a carcass ply (5) extending between the bead portions (4) and turned up at the edge portions thereof around the bead cores (6) and a breaker (7) disposed radially outside said carcass ply (5) and comprising a first ply (7A) lying adjacent to the carcass ply (5) and a second ply (7B) lying radially outside the first ply (7A) characterised in that the said carcass ply (5) is composed of cords having an elastic modulus MC of 250 to 600 kgf/mm² arranged radially at an angle of 70 to 90 degrees to the tyre equator, the first ply (7A) of the breaker (7) comprises cords having elastic modulus MB1 of 450 to 1100 kgf/mm² and arranged at an angle of 10 to 30 degrees to the tyre equator, the second ply (7B) of the breaker comprises cords having an elastic modulus MB2 of 650 to 1600 kgf/mm² and arranged at an angle of 10 to 30 degrees to the tyre equator, the elastic modulus MB2 of the second ply cords (7B) being larger than the elastic modulus MB1 of the first ply cords (7A) and the elastic modulus MB1 of the first ply cords (7A) is larger than the elastic modulus MC of the carcass ply cords (5).

2. A radial tyre according to claim 1 characterised in that the difference in elastic modulus between the radially adjacent plies including the carcass ply (5) and the breaker plies (7a,7B) is in the range of 200 to 500 kgf/mm².

## Patentansprüche

1. Radialreifen für ein Motorrad, der umfaßt ein Paar Wulstkerne (6), die jeweils einzeln in jedem Wulstbereich (4) des Reifens angeordnet sind, eine sich zwischen den Wulstbereichen (4) erstreckende und an ihren Kantenabschnitten um die Wulstkerne (6) nach oben zurückgeschlagene Karkaßlage und einen radial außerhalb der Karkaßlage (5) angeordneten Gürtel (7), welcher eine erste der Karkaßlage (5) benachbart liegende Lage (7A) und eine zweite Lage (7B) umfaßt, die radial außerhalb der ersten Lage (7A) liegt, dadurch gekennzeichnet, daß die Karkaßlage (5) zusammengesetzt ist aus Korden mit einem Elastizitätsmodul MC von 250 bis 600 kp/mm², die radial mit einem Winkel von 70 bis 90° zum Reifen-Äquator angeordnet sind, daß die erste Lage (7A) des Gürtels (7) Korde mit einem Elastizitätsmodul MB1 von 450 bis 1100 kp/mm² umfaßt, die mit einem Winkel von 10 bis 30° zum Reifen-Äquator angeordnet sind, daß die zweite Lage (7B) des Gürtels Korde mit einem Elastizitätsmodul MB2 von 650 bis 1600 kp/mm² umfaßt, die mit einem Winkel von 10 bis 30° zum Reifen-Äquator angeordnet sind, daß der Elastizitätsmodul MB2 der Korde der zweiten Lage (7B) größer als der Elastizitätsmodul MB1 der Korde der ersten Lage (7A) ist und der Elastizitätsmodul MB1 der Korde der ersten Lage (7A) größer als der Elastizitätsmodul MC der Korde der Karkaßlage (5) ist.

2. Radialreifen nach Anspruch 1, dadurch gekennzeichnet, daß der Elastizitätsmodul-Unterschied zwischen den radial einander benachbarten Lagen einschließlich der Karkaßlage (5) und den Gürtellagen (7A, 7B) im Bereich von 200 bis 500 kp/mm² liegt.

## Revendications

1. Pneumatique à carcasse radiale destiné à une motocyclette, comprenant deux tringles (6) disposées chacune dans une partie de talon (4) du pneumatique, une nappe (5) de carcasse disposée entre les parties de talon (4) et repliée aux parties de bords autour des tringles (6), et une nappe sommet (7) disposée radialement à l'extérieur de la nappe (5) de carcasse et comprenant une première nappe (7A) qui est adjacente à la nappe de carcasse (5) et une seconde nappe (7B) qui est placée radialement à l'extérieur de la première nappe (7A), caractérisé en ce que la nappe de carcasse (5) est composée de câblés ayant un module d'élasticité MC compris entre 2,5.10⁹ et 6.10⁹ Pa (250 à 600 kgf/mm²), placés radialement de manière qu'ils forment un angle de 70 à 90° avec l'équateur du pneumatique, la première nappe (7A) de la nappe sommet (7) comprend des câblés ayant un module d'élasticité MB1 compris entre 4,5.10⁹ et 1,1.10¹⁰ Pa (450 à 1 100 kgf/mm²) et ils sont disposés suivant un angle de 10 à 30° par rapport à l'équateur du pneumatique, la seconde nappe (7B) de la nappe sommet comprend des câblés dont le module d'élasticité MB2 est compris entre 6,5.10⁹ et 1,6.10¹⁰ Pa (650 à 1 600 kgf/mm²) et sont disposés suivant un angle de 10 à 30° par rapport à l'équateur du pneumatique, le module d'élasticité MB2 des câblés (7B) de la seconde nappe est supérieur au module d'élasticité MB1 des câblés (7A) de la première nappe, et le module d'élasticité MB1 des câblés (7A) de la première nappe est supérieur au module d'élasticité MC des câblés de la nappe de carcasse (5).

2. Pneumatique à carcasse radiale selon la revendication 1, caractérisé en ce que la différence des modules d'élasticité des nappes radialement adjacentes, comprenant la nappe (5) de carcasse et les nappes (7A, 7B) de la nappe sommet, est comprise entre 2.10⁹ et 5.10⁹ Pa (200 et 500 kgf/mm²).
